(19) Europäisches Patentamt
European Patent Office
Office européen des brevets

(11) **EP 3 179 334 A1**

(12) **EUROPEAN PATENT APPLICATION**

(43) Date of publication:
**14.06.2017 Bulletin 2017/24**

(51) Int Cl.:
***G06F 3/01*** *(2006.01)*    ***G02B 27/01*** *(2006.01)*

(21) Application number: **15198726.0**

(22) Date of filing: **09.12.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Airbus Defence and Space GmbH**
**85521 Ottobrunn (DE)**

(72) Inventors:
• **Dreyer, Daniel**
**85411 Hohenkammer (DE)**

• **Oberhauser, Matthias**
**81379 München (DE)**
• **Prücklmeier, Andreas**
**80339 München (DE)**
• **Mamessier, Sébastien**
**81549 München (DE)**

(74) Representative: **Kastel, Stefan et al**
**Kastel Patentanwälte**
**St.-Cajetan-Straße 41**
**81669 München (DE)**

(54) **DEVICE AND METHOD FOR TESTING FUNCTION OR USE OF A HEAD WORN SEE THROUGH AUGMENTED REALITY DEVICE**

(57)     In order to create a realistic and flexible test environment for the evaluation of augmentend reality application and devices, the invention provides a test method and a test device (10) for testing function and/or use of a head worn see through augmented reality device (12) by means of a virtual reality environment, comprising a head mounted device (16) including a virtual reality head mounted display (14) configured to display the virtual reality environment to the eyes of a user (30) through the head worn see through augmented reality device (12) and an alignment device (18) to align the head mounted display (14) and the head worn see through augmented reality device (12).

**Fig. 1**

## Description

The invention relates to a test device for testing use of a head worn see through augmented reality device. Further, the invention relates to a test method for testing use of a head worn see through augmented reality device.

Augmented reality (AR) is a technique to enrich a real-world environment with computer generated information. This information can be conformal information, i.e. elements that are spatially related to real-world objects, or information that is just a static overlay without reference to a real world object. In the aviation sector AR is widely known and has been used for decades in Head-Up-Displays and/or Head-Mounted-Displays especially in military aviation. With recent developments like smartphones and affordable head worn devices more applications of AR emerged.

With regard to the background prior art, reference is made to the following documents:

[1] Tiefenbacher, Philipp, Nicolas H. Lehment, and Gerhard Rigoll. "Augmented reality evaluation: A concept utilizing virtual reality." Virtual, Augmented and Mixed Reality. Designing and Developing Virtual and Augmented Environments. Springer International Publishing, 2014. 226-236.

[2] Oberhauser, Matthias, et al. "Bridging the Gap Between Desktop Research and Full Flight Simulators for Human Factors Research." Engineering Psychology and Cognitive Ergonomics. Springer International Publishing, 2015. 460-471.

[3] unpublished German patent application DE 10 2015 103 735.1.

[4] US 5 257 094 A

Document [1] discloses an evaluation environment for handheld AR devices in a CAVE environment. This known demonstrator uses an expensive and inflexible CAVE environment.

It is an object of the invention to create a realistic and flexible test environment for the evaluation of augmented reality application and devices.

For solving this problem the invention proposes a test device as given in claim 1 and a test method as given in the further independent claim. Advantageous embodiments are subject matter of the dependent claims.

According to one aspect, the invention provides a test device for testing function and/or use of a head worn see through augmented reality device by means of a virtual reality environment, comprising a head mounted device including a virtual reality head mounted display configured to display the virtual reality environment to the eyes of a user through the head worn see through augmented reality device and an alignment device to align the head mounted display and the head worn see through augmented reality device.

It is preferred that the alignment device comprises a positioning means for positioning the virtual reality head mounted display with regard to the see through augmented reality device.

It is preferred that the head mounted device comprises a recess or slot configured to receive the see through augmented reality device in a positvely engaged manner.

A preferred embodiment has a head worn see through augmented reality device configured to display an augmented reality content to the user and attached to the head mounted device.

It is preferred that the virtual reality head mounted display has a field of view being larger or equal than the field of view of the see through augmented reality device.

It is preferred that the virtual reality head mounted display and the see through augmented reality device are configured such that the head mounted display displays a virtual reality environment content aligned and/or corelated with an augmented reality content displayed by the see through augmented reality device.

It is preferred that the virtual reality head mounted display and the see through augmented reality device are binocular.

It is preferred that a collimation distance of the see through augmented reality device is set to be smaller or equal to a collimation distance of the virtual reality head mounted display.

It is preferred that the values of vergence angles of the see through augmented reality device and of the virtual reality head mounted display are aligned.

A preferred embodiment has at least one tracking sensor for tracking a position and/or orientation of the head of the user wherein the virtual reality head mounted display is configured to display the virtual reality content in dependance of an output of the tracking sensor.

It is preferred that the test device is configured such that the same sensor information can be used for driving both the image of the virtual reality head mounted display and the image of the see through augmented reality device.

It is preferred that the test device is configured such that the sensor information of the tracking sensor is only used for driving the image of the virtual reality head mounted display but not of the image of the see through augmented reality device in order to test an internal position and/or orientation sensor of the see through augmented reality device.

It is preferred that the test device is configured such that rotation and/or translation of the augmented reality image is driven by the virtual reality image.

According to a further aspect, the invention provides a virtual reality flight simulator comprising a test device according to any of the preceding aspects.

According to a further aspect, the invention provides a test method for testing function and/or use of a head worn see through augmented reality device by means of a virtual reality environment, comprising:

> displaying virtual reality content on a virtual reality head mounted display through the see through augmented reality device to the eyes of a user.

Preferably, the method comprises aligning the see through augmented reality device and the virtual reality head mounted display of a head mounted device on a user's head, and
displaying virtual reality content on the virtual reality head mounted display through the see through augmented reality device to the eyes of the user and displaying augmented reality content on the see through augmented reality device to the eyes of the user.

Preferably, the method comprises providing a virtual reality image of an outside world on the virtual reality head mounted display and providing additional semi-transparent augmented reality content on the see through augmented reality device and overlaying the augmented reality content to the virtual reality image.

Preferably, the method comprises aligning collimation distances of a virtual reality image displayed on the virtual reality display and of an augmented reality image displayed on the see through augmented reality device.

Preferably, the method comprises using different collimation distances of a virtual reality image displayed on the virtual reality display and of an augmented reality image displayed on the see through augmented reality device.

Preferably, the method comprises displaying the augmented reality content with a larger collimation distance and the same vergence angle as the virtual reality content.

Preferably, the method comprises evaluating optics of the see through augmented reality device by performing modifications on the virtual reality head mounted display.

Preferably, the method comprises tracking a position and/or orientation of a user's head and driving only the virtual reality content by the tracking information or driving both the virtual reality content and the augmented reality content by the tracking information.

Preferably, the method comprises testing the see through augmented reality device in a virtual flight simulator.

One aspect of the invention provides a testbed for head worn augmented reality applications and devices using a head mounted virtual reality environment.

The invention lies on the field of augmented reality applications and provides tools for testing the possible use and function of see through AR devices. Especially, the possible use and function in preferred AR applications is tested.

Some of these applications are:

- Head Up Displays in cars
- Information for manufacturing workers (e.g. AR working instructions)
- Information for maintenance personnel (e.g. AR manuals)
- Geo localized applications (Navigation, Points of interest)
- displaying information to a pilot or a driver of a vehicle, especially an air vehicle.

One of the challenges in developing augmented reality applications is the tracking mechanism. In order to overlay information in real world environment, information on the position in this environment is advantageous. This tracking can be based on external sensors like optical or magnetic tracking systems; it can be based on internal sensors like GPS, a compass, accelerometers, or gyroscopes; or it can rely on a video feed of the real world.

After a technical implementation of an AR application, it should be evaluated in a realistic environment. It is especially advantageous to evaluate if the chosen tracking method and implementation work in different environments. In a laboratory it can be hard to create different realistic scenarios for this evaluation. Field-tests on the other hand are much more important but might be difficult because of limited time and resources (e.g. real flight tests).

In these cases immersive virtual worlds can be a flexible low-cost alternative to create a realistic surrounding for evaluating AR applications. The concept of using virtual reality (VR) for evaluating AR applications was proposed by Tiefenbacher et al. in 2014, [1]. He describes how to utilize an expensive CAVE environment for the evaluation of handheld AR applications. This invention proposes a much cheaper and more flexible Head Mounted Display (HMD) to be used to visualize the virtual surrounding.

In the following, preferred embodiments of the invention are described with reference to the attached drawings, wherein

Fig. 1     is an exploded perspective view of a preferred embodiment of a test device for testing fuction and/or use of a head worn see through augmented reality device in a virtual reality environment;

Fig. 2     shows the exploded view from Fig. 1 as seen from above;

Fig. 3     is a further perspective view of the test device in use;

Fig. 4     is a further perspective view of the test device in use;

Fig. 5     is a schematic perspective view illustrating the impression of the user using the test device,

Fig. 6 is a schematic view illustrating the definition of a vergence angle $\alpha$ in the overlapped content of Fig. 5;

Fig. 7 is a schematic view illustrating different vergence angles that will lead to double images in the overlapped content of Fig. 5;

Fig. 8 is a schematic view illustrating same vergence angles but different collimation distances in the overlapped content such as given in Fig. 5;

Fig. 9 is a schematic view illustrating an overlapped content similar as in Fig. 5 with the ideal case of same collimation distance and vergence angle;

Fig. 10 is a block diagram illustrating use of external tracking both for virtual reality content as well as for augmented reality content;

Fig. 11 is a block diagram illustrating use of external tracking for the virtual reality content and internal tracking for augmented reality content;

Fig. 12 is a block diagram illustrating image based tracking wherein the augmented reality content is tracked in dependence from an image of the virtual reality content; and

Fig. 13 is a block diagram illustrating a virtual reality flight simulator environment.

In the following, preferred embodiments of a test device 10 for testing or evaluating a head worn see through augmented reality device 12 are described.

In the following the term "head worn device" - HWD 12 - is used for the head worn see-through augmented reality device and the term "Head Mounted Display" - HMD 14 - is used for a display of a head mounted virtual reality device 16. Hardware:

The head worn device 12 is the subject of the evaluation. There are different products on the market like the Epson BT-200. All these head worn devices 12 have transparent glasses 50 with semi transparent combiners 51 that project a screen/image in the field-of-view of the user 30. On these transparent screens/images 2D or 3D content is displayed to the user 30. Besides the visualization of information most of these head worn devices 12 also incoporate sensors like a 2D/3D front camera, accelerometers and/or a gyroscope. In the following, it is described how to evaluate different head worn devices 12. Yet, the design and the capabilities of the Epson BT-200 will be used as a reference.

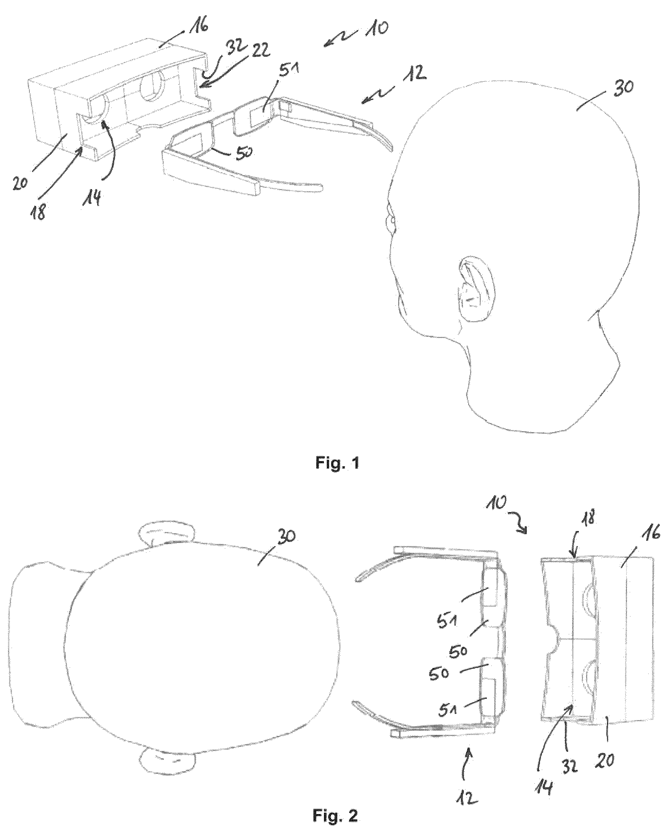

Fig. 1 and 2 show the test device 10 comprising a head mounted device 16 with the virtual reality head mounted display 14 that is configured to display a virtual reality environment or a virtual reality content to the user 30.

Further, the test device 10 includes an alignment device 18 for aligning the HWD 12 and the HMD 14. For example, the head mounted device 16 has a housing 20, the binocular HMD 14, and a reception or a recess 22 adapted to receive and hold the HWD 12 relative to the HMD 14.

The HWD 12 is connected to a data processing equipment (not shown) configured to generate virtual reality content 26 to be displayed on the HMD 14. The HWD 12 is connected to a data proceesing unit (not shown) configured to generate augmented reality content 28 to be displayed in the field of view of the user.

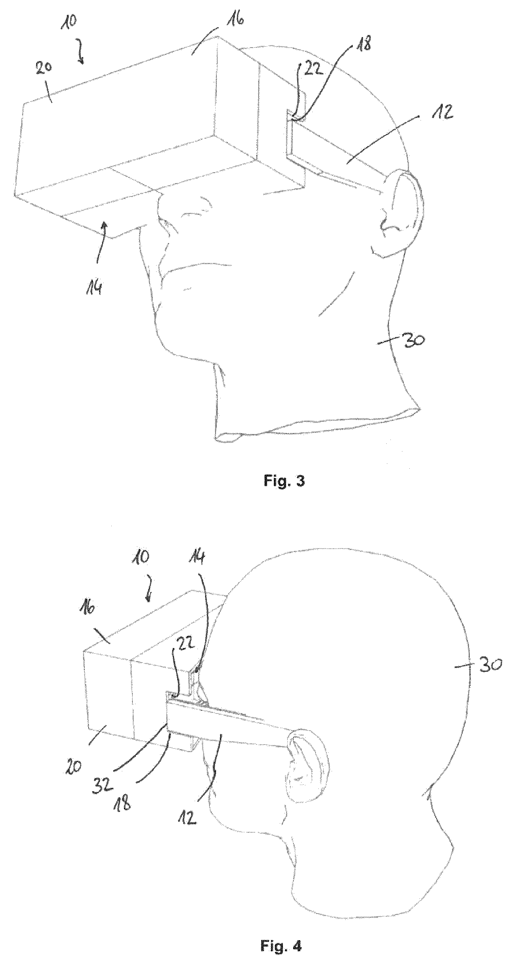

Fig. 1 to 4 show the hardware that the user 30 has to wear when evaluating the head worn device 12. A HMD 14 that is modified compared to usual HMDs is used. From a design and ergonomic point of view, a slot 32 for holding the head worn device 12 can to be created to provide the recess 22. This slot 32 might be modified for different head worn devices 12. A flexible strap (not shown) should be added to hold the HMD 14.

Optics:

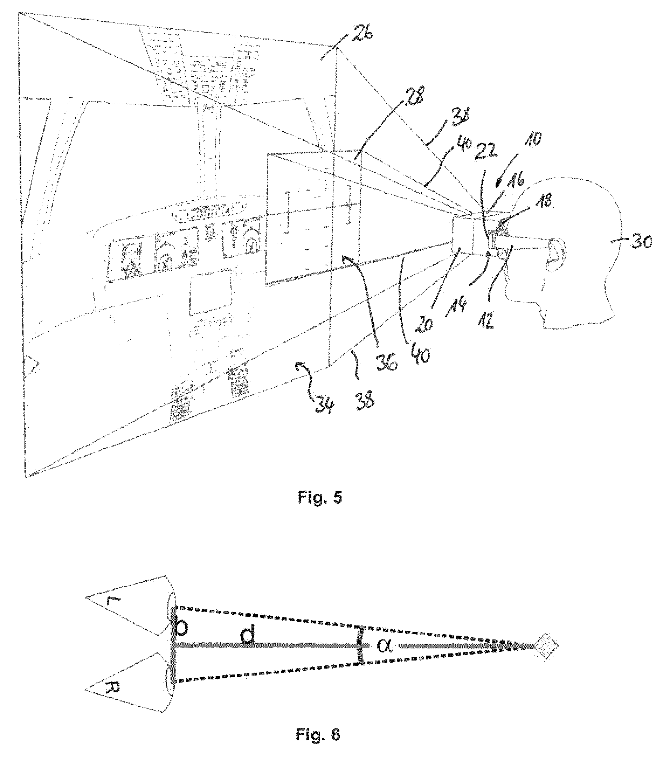

When combining the head worn device 12 and the head mounted display 14 the user is able to see two images 34, 36 that overlap in the field of view. The head mounted display 14 provides a virtual reality content 26, such as a virtual reality image 34 of the outside world, and the head worn device 12 provides additional semi-transparent AR content 28 (e.g. a semi-transparent augmented reality image 36) that is overlaid to the VR content. To provide a realistic experience to the user 30 the field of view 38 of the Virtual Reality (HMD 14) should be larger (or equal) than the field of view 40 of the AR (HWD 12) application. Fig. 5 illustrates this by providing a VR image 34 of a virtual reality environment of a cockpit and an AR image 36 of a head up display.

Overlapping the images 34, 36 of the two devices 12, 14 is not a straightforward task. Two parameters have to be aligned in order to make it usable: the collimation distance d and the vergence angle $\alpha$. Fig. 6 illustrates the definition of these two paramater by illustrating the viewing direction of a left eye L and a right eye R of the user 30. It can be noted:

$$(1) \quad \frac{b:2}{d} = \tan(\alpha : 2),$$

and

$$(2) \quad d = \frac{b:2}{\tan(\alpha:2)} \approx \frac{b}{\tan(\alpha)} \, .$$

wherein b is the image distance, i.e. the distance between the image for the left and right eyes L, R.

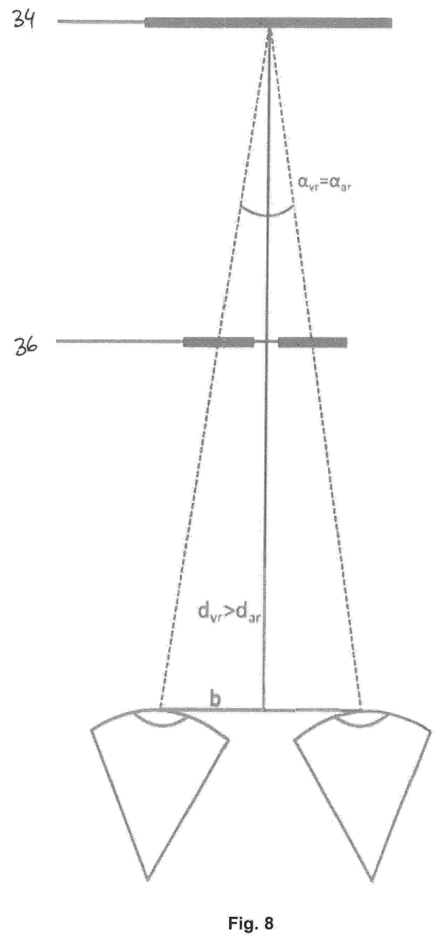

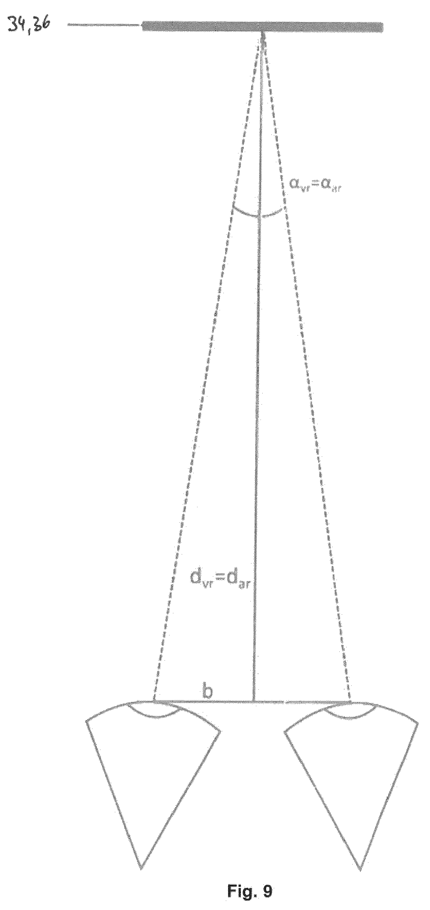

There are at least to parameters that define the image distance b of a binocular HMD 14 and the image distance of b a binocular HWD 12. First the image distance b is defined by the (projection) optics of the device and secondly it is defined by the vergence angle $\alpha$ of the stereo (left and right) image as shown in Figure 9. Therefore the values of the vergence angle $\alpha_{VR}$ and $\alpha_{Ar}$ (Left and Right image of stereo image) of the HMD 14 and the HWD 12 have to be aligned to avoid double images. Otherwise if the subject/user accomodates on the AR image 36 the perception of the VR image 34 will be a double image and vice versa, see Fig. 8.

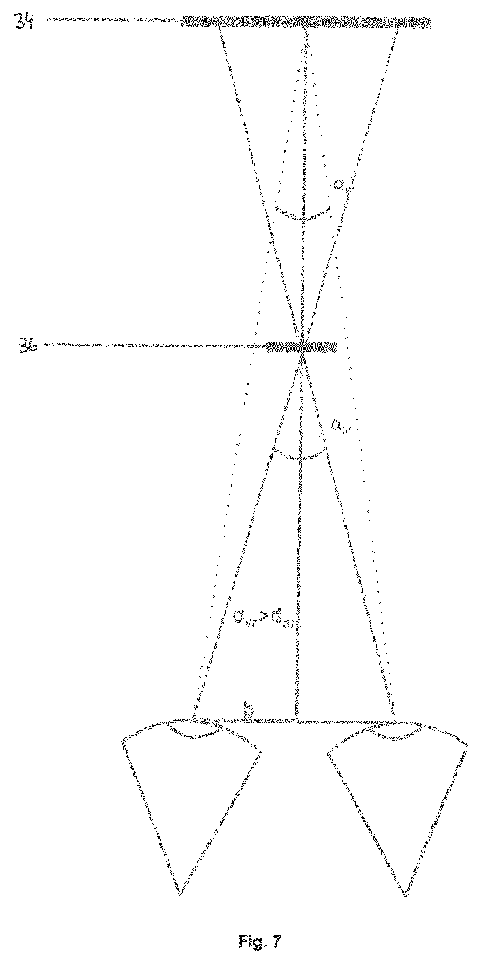

Second, the image distance b or collimation distance d of the optics ($d_{VR}$ and $d_{AR}$) should be aligned in the two devices 12, 14 according to the application needs. Otherwise one of the pictures will get blurry while focusing on the other one, see Fig. 7, this may be difficult and maybe even not acceptable for some applications.

Using different collimation distances $d_{AR}$ and $d_{VR}$ (see Fig. 7) of the HMD 12 and HWD 14 might be desirable for a few applications and can be an advantage sense for the user e.g. for the head up display application.

In this case the HWD 12 with the head up display symbology should have a larger collimation distance than the HMD 14 ($d_{VR} > d_{AR}$), but the same vergence angle of the stereo images ($\alpha_{VR} = \alpha_{AR}$) to avoid double images, see Fig. 8. Such a setup would add a more realistic head up display application to VR application as in a real cockpit the pilot focusses the image of the head up display at infinity (approx. 20m) looking outside the cockpit window.

In some cases both parameters should be the same as shown in Fig. 9. In this case an adjustment of the parameters in the HWD 12 or HMD 14 should be possible to bring both parameters into alignment.

If not only the content of the head worn device 12, but also the optics should be evaluated, modifications should only be performed on the head mounted display 14. Or a head mounted display 14 should be chosen that matches the optical specifications of the head worn device 12.

Changing the vergence angle ($\alpha_{VR}$ and $\alpha_{AR}$) of the head worn device 12 can be achieved by changing the distance of the image of the left eye L and the right eye R. This can be done on the software side by changing the image distance relative to each other on the microdisplay of the head worn device. Or it can be adjusted on the hardware.

Tracking:

In addition to the optics evaluation, also the tracking sensors can be analysed with the proposed invention. Both, the augmented reality image 36 as well as the virtual reality image 34 rely on tracking information (position/orientation of the head) to create the image.

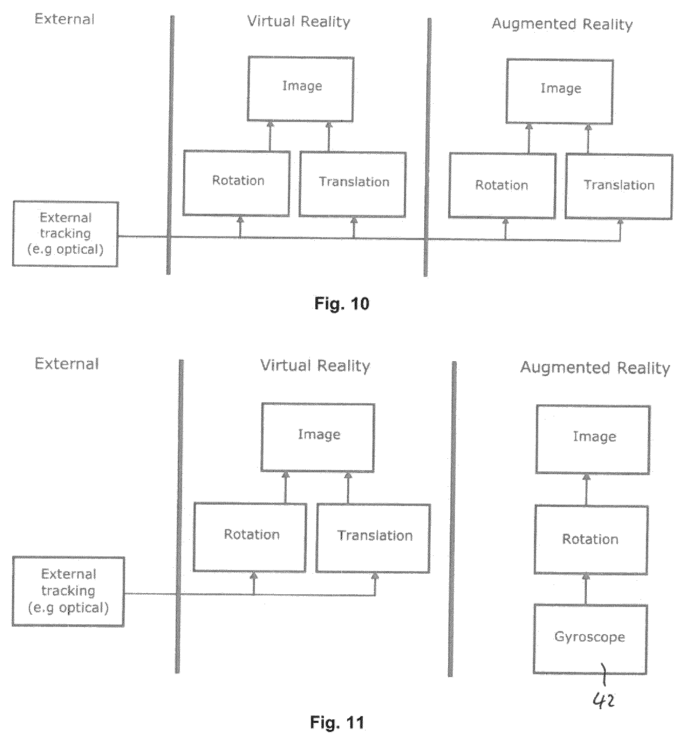

The most accurate tracking systems rely on external sensors to determine the position and rotation of the users head. Consequently, the rotation and translation information for the virtual reality image 34 should be gathered from these external sensors. The same sensor information can be used to drive the image of the augmented reality device 36. Fig. 10 shows this sensor architecture.

To evaluate the accuracy of an internal sensor 42 (such as a gyroscope) of the head worn device 12 in the given AR application this sensor can be used to create the AR image 36. Fig. 11 shows this sensor architecture. As the internal sensor 42 - gyroscope - does not provide translation information in this case, only rotation can be used for creating the AR image 36.

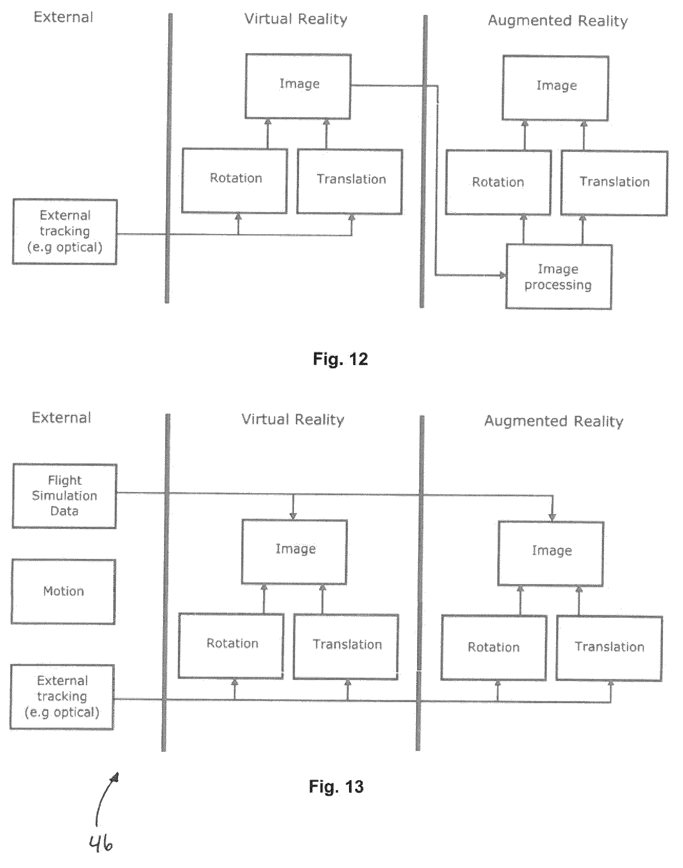

Some AR applications rely on video information of the environment captured by cameras located in front of the device. This real world image can be replaced by the VR image 34 to drive rotation and translation of the AR image 36 as illustrated in Fig. 12.

As example for a use case a head worn device evaluation in a Virtual Flight Simulator is described in the following referring to Fig. 13.

A virtual reality flight simulator environment 46 has been developed in order to assess new cockpit and HMI concepts in an early design stage as this is described in more detail in the German patent application DE 10 2015 103 735.1, incorporated herein by reference. This environment 46 can be used to evaluate head worn devices 12 with conformal and non-conformal symbology (e.g. an artificial horizon, airspeed, altitude, etc.) In this case the AR device 12 needs information on simulated parameters. This data is provided by the flight simulation framework as a data pool that can be accessed by multiple components. To add realism to the system a motion platform is able to create forces and turbulences.

List of references:

| | |
|---|---|
| 10 | test device |
| 12 | head worn see through augmented reality device - HWD |
| 14 | head mounted display - HMD |
| 16 | head mounted virtual reality device (head mounted device) |
| 18 | alignment device |
| 20 | housing |
| 22 | recess |
| 26 | vitural reality content |
| 28 | augmented reality content |
| 30 | user |
| 32 | slot |

34 virtual reality image
36 augmented reality image
38 field of view of AR-HMD
40 field of view of AR-HWD
42 internal sensor, e.g. gyroscope
46 reality flight simulator environment
50 glasses
51 combiners

**Claims**

1. Test device (10) for testing function and/or use of a head worn see through augmented reality device (12) by means of a virtual reality environment, comprising a head mounted device (16) including a virtual reality head mounted display (14) configured to display the virtual reality environment to the eyes of a user (30) through the head worn see through augmented reality device (12) and an alignment device (18) to align the head mounted display (14) and the head worn see through augmented reality device (12).

2. Test device according to claim 1,
   **characterized in that** the alignment device (18) comprises a positioning means for positioning the virtual reality head mounted display (14) with regard to the see through augmented reality device (12).

3. Test device according to any of the preceding claims, **characterized in that** the head mounted device (16) comprises a recess (22) or slot (36) configured to receive the see through augmented reality device (12) in a positvely engaged manner.

4. Test device according to any of the preceeding claims,
   **characterized by** a head worn see through augmented reality device (12) configured to display an augmented reality content (28) to the user (30) and attached to the head mounted device (16).

5. Test device according to claim 4,
   **characterized in that** the virtual reality head mounted display (14) has a field of view (38) being larger or equal than the field of view (40) of the see through augmented reality device (12).

6. Test device according to any of the claims 4 or 5,
   **characterized in that** the virtual reality head mounted display (14) and the see through augmented reality device (12) are configured such that the head mounted display (14) displays a virtual reality content (26) aligned and/or corelated with an augmented reality content (28) displayed by the see through augmented reality device (12).

7. Test device according to any of the preceding claims,
   **characterized in that** the virtual reality head mounted display (14) and the see through augmented reality device (12) are binocular and further **characterized by** at least one of the following features

   a) that a collimation distance ($d_{AR}$) of the see through augmented reality device (12) is smaller or equal to a collimation distance ($d_{VR}$) of the virtual reality head mounted display (14); and/or
   b) that the values of vergence angles of the see through augmented reality device (12) and of the virtual reality head mounted display (14) are aligned.

8. Test device according to any of the preceding claims,
   **characterized by** at least one tracking sensor for tracking a position and/or orientation of the head of the user (30) wherein the virtual reality head mounted display (14) is configured to display the virtual reality content (28) in dependance of an output of the tracking sensor, and wherein

   a) the test device (10) is configured such that the same sensor information can be used for driving both the image (34) of the virtual reality head mounted display (14) and the image (36) of the see through augmented reality device (12); and/or
   b) the test device (10) is configured such that the sensor information of the tracking sensor is only used for driving the image (34) of the virtual reality head mounted display (14) but not of the image (36) of the see through augmented reality device (12) in order to test an internal position and/or orientation sensor of the see through augmented reality device (12).

9. Virtual reality flight simulator (46) comprising a test device (10) according to any of the preceding claims.

10. Test method for testing function and/or use of a head worn see through augmented reality device (12) by means of a virtual reality environment, comprising:

    displaying virtual reality content on a virtual reality head mounted display (14) through the see through augmented reality device (12) to the eyes of a user (30).

11. Test method according to claim 10, further comprising:

    aligning the see through augmented reality device (12) and the virtual reality head mounted display (14) of a head mounted device (16) on a user's head, and
    displaying virtual reality content (26) on the virtual reality head mounted display (14) through the see through augmented reality device (12) to the eyes of the user (30) and displaying augmented reality content (28) on the see through augmented reality device to the eyes of the user (30).

12. Test method according to any of the claims 10 or 11, comprising at least one, several or all of the following steps:

a) providing a virtual reality image (34) of an outside world on the virtual reality head mounted display (14) and providing additional semi-transparent augmented reality content (28) on the see through augmented reality device (12) and overlaying the augmented reality content (28) to the virtual reality image (34);
b) aligning collimation distances of a virtual reality image (34) displayed on the virtual reality display (14) and of an augmented reality image (36) displayed on the see through augmented reality device (12),
c) using different collimation distances of a virtual reality image (34) displayed on the virtual reality display (14) and of an augmented reality image (36) displayed on the see through augmented reality device (12);
d) displaying the augmented reality content (28) with a larger collimation distance and the same vergence angle as the virtual reality content (26);
e) evaluating optics of the see through augmented reality device (12) by performing modifications on the virtual reality head mounted display (14);
f) tracking a position and/or orientation of a user's head and driving only the virtual reality content (26) by the tracking information or driving both the virtual reality content (26) and the augmented reality content (28) by the tracking information;
g) testing the see through augmented reality device (12) in a virtual flight simulator.

**Fig. 1**

**Fig. 2**

Fig. 3

Fig. 4

Fig. 5

Fig. 6

Fig. 7

Fig. 8

Fig. 9

External | Virtual Reality | Augmented Reality

Image

Rotation | Translation

Image

Rotation | Translation

External tracking (e.g optical)

**Fig. 10**

External | Virtual Reality | Augmented Reality

Image

Rotation | Translation

Image

Rotation

Gyroscope

External tracking (e.g optical)

42

**Fig. 11**

External | Virtual Reality | Augmented Reality

Image

Rotation | Translation

Rotation | Translation

External tracking (e.g optical)

Image processing

**Fig. 12**

External | Virtual Reality | Augmented Reality

Flight Simulation Data

Image

Image

Motion

Rotation | Translation

Rotation | Translation

External tracking (e.g optical)

46

**Fig. 13**

15

Europäisches
Patentamt

European
Patent Office

Office européen
des brevets

# EUROPEAN SEARCH REPORT

Application Number

EP 15 19 8726

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/234189 A1 (LYONS FRANKLIN A [US]) 20 August 2015 (2015-08-20) | 1 | INV.<br>G06F3/01 |
| Y | * figures 17A, 19, 20B * | 1-12 | G02B27/01 |
| Y | RAGAN E ET AL: "Simulation of Augmented Reality Systems in Purely Virtual Environments",<br>VIRTUAL REALITY CONFERENCE, 2009. VR 2009. IEEE, IEEE, PISCATAWAY, NJ, USA,<br>14 March 2009 (2009-03-14), pages 287-288,<br>XP031465506,<br>ISBN: 978-1-4244-3943-0<br>* abstract *<br>* page 287 - page 288 * | 1-12 | |

TECHNICAL FIELDS
SEARCHED      (IPC)

G06F
G02B

The present search report has been drawn up for all claims

| Place of search | Date of completion of the search | Examiner |
|---|---|---|
| Munich | 12 May 2016 | Denise, Christophe |

EPO FORM 1503 03.82 (P04C01)

## ANNEX TO THE EUROPEAN SEARCH REPORT
## ON EUROPEAN PATENT APPLICATION NO.

EP 15 19 8726

This annex lists the patent family members relating to the patent documents cited in the above-mentioned European search report.
The members are as contained in the European Patent Office EDP file on
The European Patent Office is in no way liable for these particulars which are merely given for the purpose of information.

12-05-2016

| Patent document cited in search report | Publication date | Patent family member(s) | Publication date |
|---|---|---|---|
| US 2015234189 A1 | 20-08-2015 | US 2015234189 A1<br>US 2015234192 A1<br>US 2015234193 A1<br>US 2015234501 A1<br>US 2015235426 A1<br>WO 2015126987 A1 | 20-08-2015<br>20-08-2015<br>20-08-2015<br>20-08-2015<br>20-08-2015<br>27-08-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102015103735

- US 5257094 A

**Non-patent literature cited in the description**

- Augmented reality evaluation: A concept utilizing virtual reality. **TIEFENBACHER, PHILIPP ; NICOLAS H. LEHMENT ; GERHARD RIGOLL.** Virtual, Augmented and Mixed Reality. Designing and Developing Virtual and Augmented Environments. Springer International Publishing, 2014, 226-236

- Bridging the Gap Between Desktop Research and Full Flight Simulators for Human Factors Research. **OBERHAUSER ; MATTHIAS et al.** Engineering Psychology and Cognitive Ergonomics. Springer International Publishing, 2015, 460-471